# EUROPEAN PATENT SPECIFICATION

(11) **EP 0 481 022 B1**
(45) Date of publication and mention of the grant of the patent: **29.11.1995**
(21) Application number: 91905205.0
(22) Date of filing: 19.02.1991
(51) Int. Cl.: F16H 39/40, B62D 11/18

(54) **HYDRAULIC DIFFERENTIAL IN AN ELECTRICAL MOTOR**
HYDRAULISCHES GETRIEBE FÜR EINEN ELEKTRISCHEN MOTOR
DIFFERENTIEL HYDRAULIQUE POUR MOTEUR ELECTRIQUE

(30) Priority: 21.02.1990 SE 9000609
(43) Date of publication of application: 22.04.1992
(73) Proprietor: THORELL, Christer, S-722 20 Västeras (SE)
(72) Inventor: THORELL, Christer, S-722 20 Västeras (SE)
(86) International application number: SE9100120
(87) International publication number: WO9113274

(56) References cited:
- EP-A- 0 384 759
- FR-A- 2 167 697
- GB-A- 1 126 363
- SE-B- 0 460 552

## Description

The field of applications for the invention is a power unit (device) in vehicles. The device uses the technic of a pair of hydraulic pumps/motors fluidly connected in a closed system with a valve (solenoid directional controls), and two accumulators within a rotor in an electrical motor where the valve will be able to change the inlet and outlet of the two hydralic pumps/motors.

Accumulators and check valves are used to compensate for the leakage of oil within the system.

Such unit according to the preamble of claim 1 is disclosed in SE-B-460552.

In comparison to the state of the art, the invention achieves the following :
- In a vehicle it creates a very favorable concentraded centre of gravity and by that less total weight and cost.
- Together with a transmission of drive belts(cogged) it enables a high efficiency in comparison with a conventional mechanical transmission.
- The manoevrability will be good because the two shafts of the rotor may rotate at different speed and direction.
- As an electrical gauge it can indicate relative movement between the two shafts. The rotational speed had to be compared with a reference rotational speed at one shaft.

The device of the invention includes a pair of hydraulic pumps/motors with adjustable displacement which are fluidly and mechanically connected, when they transmit the same torque on the shafts they act as one rigid shaft.The rigid shaft is the 'shaft' of the rotor of an electrical motor. The hydraulic system is totaly internal within the rotor. By practical reasons there will be a valve(solenoid directional controls), check valves and accumulators in the system. There is a valve in the system which makes it possible to change the fluid flow in the system. That makes it possible to get different rotational speed and even different direction of the rotation. A further explanation to the invention will be below by refering to the accompanying drawings wherin:

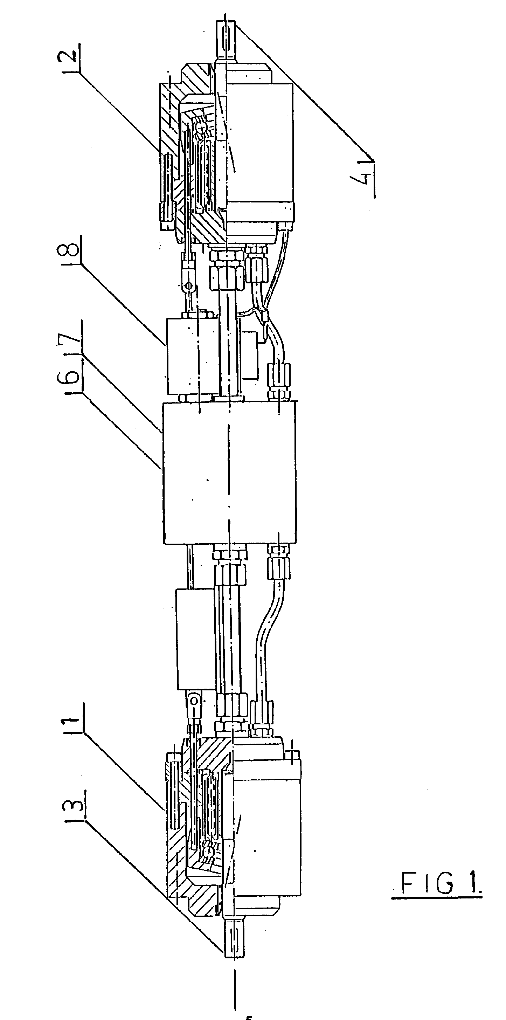

Fig.1 illustrates schematically the 'shaft' in the rotor of the powerunit(device).

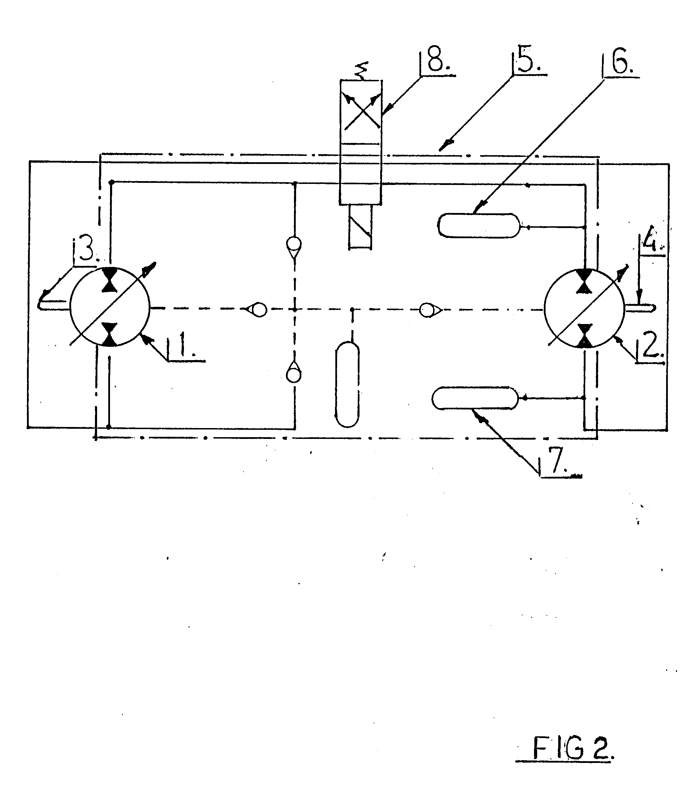

Fig.2 illustrates the fluidchart out of functional symbols

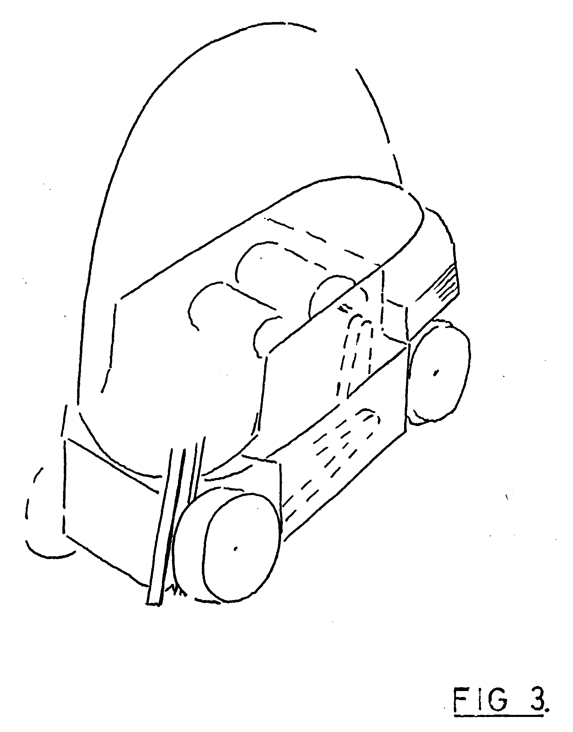

Fig.3 illustrates an exampel of application in an electrical forklift-truck or autocarrier.

Each of the hydraulic pumps/motors with adjustable displacement (1) and (2), the accumulators (6) and (7) and the valve, solenoid directional controls, (8) are fluidly connected in a closed hydraulic system within the rotor (5) of an electrical motor. The hydraulic pumps/motors with adjustable displacement are 'flanged' to the rotor. When the torque is equal of the two different shafts of the rotor the hydraulic pumps/motors with adjustable displacement pump towards each other with equal pressure. Then the torque of the rotor is transmitted, equally (0,5) to the different shafts (3) and (4) of the two hydraulic pumps/motors with adjustable displacement, compare the conventional differential.If the torque is greater in one end of the 'shaft' of the rotor (M2) than the other end of the 'shaft' of the rotor (M1) the torque of the rotor will pump the fluid from the hydraulic pump/motor with adjustable displacement (2) to the other hydraulic pump/motor with adjustable displacement (1),for instance 25 litres/min .

The hydraulic pump/motor (1) with adjustable displacement will rotate the shaft (3) in the same relative rotation backwards per revolution of the rotor as the hydraulic pump/motor with adjustable displacement rotates relative the rotor forwards. With one shaft 'locked' the other will rotate at the double speed of rotation of the rotor. Presume the torque of the motor=Mm and angular velocity=wm.

Mm*wm=M1*wm+M2*Wm and if wm=0 for the shaft with M2 Mm=2*M1.

If one changes the direction of the flow of the fluid and a flow is created by means of 'slipring' one of the two hydraulic pumps/motors with adjustable displacement and the adjustable displacement is smaller for the other hydraulic pump/motor with adjustable displacement, the later one will rotate backwards relative the rotor. To be able to in a simple way control the valve, and the adjustable displacement of the hydraulic pumps/motors the shafts of the driving device will be electrically insulated from each other. That means, they can be electrically controlled by different polarity of voltage at different end of the shafts of the powerunit(device).

The centre-line of the slide of the valve (solenoid directional controls) shall be in line or parallel with the centre-line of the rotor to avoid unbalance when altering the slide into different position. To manoeuvre the flow in the hydralic pump/motors with adjustable displacement one use an electrical linear 'actuator', a servo or small electrical motors where the electrical power are turned off at the end of the movement.

## Claims

1. A hydrostatic differential comprising two hydrostatic units (1, 2) which are fluidly connected in a closed hydraulic circuit in such a way that if the housings of both units (1, 2) are locked, the output shaft (3,4) of a first unit (1, 2) rotates in the opposite direction relative to the output shaft (4,3) of the second unit (2, 1), if a directional control valve (8) is placed in a first position (figure 2); if the directional control valve (8) is placed in a second position both output shafts (3, 4) rotate in the same direction, wherein the housings of both units are mechanically connected to the shaft of the rotor of an electrical motor,
characterized in that
both hydrostatic pump/motor units (1, 2) have both an adjustable displacement and in that the difference in rotation speed between the two output shafts (3, 4) is adjustable by adjusting the displacement or capacity per revolution of the pump/motor units (1, 2).

2. A hydrostatic differential device according to claim 1
**characterized** in that
the hydraulic system comprises oil accumulators (6) and (7) separated by the hydraulic pump/motor units with adjustable displacement (1) and (2) to enable an elastic start of the rotation of the shafts.

3. A hydrostatic differential device according to claim 1
**characterized** in that the hydraulic system comprises two pumps, valves (8) and checkvalves to compensate for leakage of oil.

4. A hydrostatic differential device according to claim 1
**characterized** in that the hydraulic system comprises accumulators (6) and (7) and checkvalves to compensate for leakage of oil.

5. A hydrostatic differential device according to claim 1
**characterized** in that
the two hydraulic pumps/motors with adjustable displacement (1) and (2) are electricallly insulated from each other in such a way that controlling the direction of the flow within the rotor is possible and to adjust the displacement of the hydraulic pumps/motors by means of different electric polarity on the shafts and electrically controlled at the end of the movement by the way that the power is turned(controlled) off.

6. A hydrostatic differential device according to claim 1
**characterized** in that the valve (8) for changing the direction of the flow has its centre-line situated in line or parallel with the axle of the rotor (3) and (4) in such a way that no unbalance will appear when changing the direction of the flow.

## Patentansprüche

1. Eine Hydrostatische Differential zusammengesetz aus zwei Hydroeinheiten (1, 2) dieser sind hydraulisch angeschlossen in einen Kreislauf auf so Weise so wenn die beide Gehäuse des Einheiten(1, 2) festgehalten sind und der Zapfen(3, 4) des erste Einheit(1, 2) in entgegensetzter Richtung rotiert wird relativt der Zapfe(4, 3) des zweite Hydroeinheit(2, 1), und ein Wegeventil(8) ist in die erste Position, Schaltstellung (Fig. 2), und wenn die Wegeventil(8) ist in die zweite Position beide Zapfen(3, 4) rotieren in die selbe Richtung, ausserdem die beide Gehäusen der Einheiten in der Rotor in eine Elektrische motor, befestigt sind, dadurch gekennzeichnet, dass die beide Hydroeinheiten, Pump/Motor(1, 2), beide eine verstellbarer Fördermenge haben, und damit die verschiedene Geschwindigkeit der Umdrehung zwischen die beide Zapfen(3, 4) wird reguliert bei regulieren die Deplacement/Kapazität pro Umdrehung der Pumpen/Motoren(1, 2).

2. Eine hydraulisches Getriebe nach Anspruch 1, dadurch gekennzeichnet, dass in das Hydraulsystem, Kreislauf, gibt es Akkumulatoren(6) und (7) welche getrennt sind von den Hydroeinheiten, Pumpen/Motoren, mit verstellbaren Fördermenge(1) und (2) zu erzeugen einem federnde Anfang der Umdrehung die Zapfen.

3. Eine hydraulische Getriebe nach Anspruch 1, dadurch gekennzeichnet, dass in das Hydraulsystem, Kreislauf, gibt es zwei Pumpen, Wegeventil(8) und Ruckschlagventil die Leckage aus Druckmittel zu kompensieren.

4. Eine hydraulische Getriebe nach Anspruch 1, dadurch gekennzeichnet, dass in das Hydraulsystem, Kreislauf, gibt das Akkumulatoren(6) und (7) und Ruckschlagventil die Leckage aus Druckmittel zu kompensieren.

5. Ein hydraulische Getriebe nach Anspruch 1, dadurch gekennzeichnet, dass die beide Hydroeinheiten, Pumpen/Motoren, mit verstellbaren Fördermenge(1) und (2) sind elektrisch isoliert von einander, dadurch mit verschiedener Poläritet an den Enden der Zapfen, wird die Zirkulationrichtung der Druckmittel in dem Rotor möglich zu wechseln und die Deplacement pro Umdrehung der Hydroeinheiten zu regulieren. Die Enden der Bewegung sind reguliert bei ausschalten der Starkstrom.

6. Eine hydraulishe Getriebe nach Anspruch 1, dadurch gekennzeichnet, dass das Wegeventil(8), um die Zirkulationsrichtung der Druckmittel in dem Rotor zu wechseln, seine Zentrumlinie in Linie oder Parallel mit der Symmetrieachse in dem Rotor (3) und (4) haben, deshalb kein Unbalance zu erzeugen.

## Revendications

1. Un différentiel hydrostatique comprenant deux unités hydrostatiques (1 et 2), reliées hydrauliquement dans un circuit fermé de telle manière que les carters des deux unités (1 et 2) sont en prise directe. L'axe de sortie (3 ou 4) de l'une des unités (1 ou 2) tourne dans le sens opposé de l'autre axe de sortie (4 ou 3) de l'autre unité (2 ou 1), si une soupape de contrôle directionnel (8) est placée dans une première position (schéma 2). Si la soupape de contrôle directionnel (8) est placée dans une deuxième position, les deux axes de sortie (3 et 4) tournent dans le même sens, et les deux carters des deux unités sont reliés mécaniquement à l'axe du roteur d'un moteur électrique. L'invention est caractérisée par le fait que les deux pompes hydrostatiques/moteurs (1 et 2) sont chacune à déplacement modifiable et que la différence de vitesse de rotation entre les deux axes de sortie (3 et 4) peut être modifiée en ajustant le déplacement ou la capacité par révolution des pompes/moteurs (1 et 2).

2. Un dispositif de différentiel hydrostatique conforme à la revendication 1, caractérisé par le fait que le système hydraulique comprend des acumulateurs à huile (6) et (7), séparés par les pompes hydrauliques/moteurs à déplacement modifiable (1) et (2), de manière à permettre un démarrage différencié de la rotation des axes.

3. Un dispositif de différentiel hydrostatique conforme à la revendication 1, caractérisé par le fait que le système hydraulique comprend deux pompes, des soupapes (8) et des soupapes de retenue pour compenser les fuites d'huile.

4. Un dispositif de différentiel hydrostatique conforme à la revendication 1, caractérisé par le fait que le système hydraulique comprend des accumulateurs (6) et (7) et des soupapes de retenue pour compenser les fuites d'huile.

5. Un dispositif de différentiel hydrostatique conforme à la revendication 1, caractérisé par le fait que les deux pompes hydrauliques/moteurs (1) et (2) à déplacement modifiable sont isolés électriquement l'un de l'autre, de manière à ce qu'il soit possible de commander le sens du flux à l'intérieur du roteur et d'ajuster le déplacement des pompes hydrauliques/moteurs en appliquant une polarité électrique différente sur les axes, avec une commande électrique en fin de mouvement par la mise hors tension.

6. Un dispositif de différentiel hydrostatique conforme à la revendication 1, caractérisé par le fait que la ligne médiane de la soupape (8) permettant de modifier le sens du flux doit être alignée ou parallèle avec l'axe du roteur (3 ou 4), de manière à éviter tout déséquilibre lors des changements du sens du flux.
